# EUROPÄISCHE PATENTSCHRIFT

(11) **EP 1 521 992 B1**
(45) Veröffentlichungstag und Bekanntmachung des Hinweises auf die Patenterteilung: **06.09.2006**
(21) Anmeldenummer: 03740421.7
(22) Anmeldetag: 05.07.2003
(51) Int. Cl.: G02F 1/13

(54) **HINTERLEUCHTETE FLÜSSIGKRISTALLANZEIGE, INSBESONDERE ZUM EINSATZ ALS ANZEIGEMODUL HINTER DER BEDIENBLENDE EINES HAUSHALTSGROSSGERÄTES**
BACKLIT LIQUID CRYSTAL DISPLAY, PARTICULARLY FOR USE AS A DISPLAY MODULE BEHIND THE OPERATING PANEL OF A LARGE HOUSEHOLD APPLIANCE
SYSTEME D'AFFICHAGE A CRISTAUX LIQUIDES RETROECLAIRE SERVANT NOTAMMENT DE MODULE D'AFFICHAGE DERRIERE LE PANNEAU DE COMMANDE D'UN GRAND APPAREIL ELECTROMENAGER

(30) Priorität: 11.07.2002 DE 20210707 U; 13.09.2002 DE 10242589
(43) Veröffentlichungstag der Anmeldung: 13.04.2005
(73) Patentinhaber: Diehl AKO Stiftung & Co. KG, 88239 Wangen (DE)
(72) Erfinder: Mörsch, Norbert, 88239 Wangen im Allgäu (DE)
(74) Vertreter: Diehl Patentabteilung
(86) Internationale Anmeldenummer: PCT/EP2003/007206
(87) Internationale Veröffentlichungsnummer: WO 2004/008234

(56) Entgegenhaltungen:
- US-A- 4 796 977
- PATENT ABSTRACTS OF JAPAN vol. 1998, no. 11, 30. September 1998 (1998-09-30) -& JP 10 153764 A (ROHM CO LTD), 9. Juni 1998 (1998-06-09)
- PATENT ABSTRACTS OF JAPAN vol. 018, no. 211 (P-1726), 14. April 1994 (1994-04-14) -& JP 06 011718 A (HITACHI LTD), 21. Januar 1994 (1994-01-21)
- YEE E: "MOLDED INTERCONNECT DEVICES RESHAPE ELECTROMECHANICAL DESIGN" ELECTRONIC DESIGN, PENTON PUBLISHING, CLEVELAND, OH, US, Bd. 48, Nr. 18, 5. September 2000 (2000-09-05), Seiten 141-142,144,146,148, XP001143450 ISSN: 0013-4872

## Beschreibung

Die Erfindung betrifft eine Flüssigkristallanzeige gemäß dem Oberbegriff des Anspruches 1, wie sie etwa aus der JP 10-153764 bekannt ist. Dort ist die Flüssigkristallzelle in eine H-förmige Struktur integriert, deren Steg die optisch aktive Zelle ausmacht und deren Schenkel als Abstandshalter zwischen einer sichtseitig darüber liegenden Glasplatte und einem darunter gelegenen Schaltungsträger wirken. Unterhalb der optisch aktiven Flüssigkristallzelle ist ein von einem reflektierenden Gehäuse umgebener Lichtleiter angeordnet, in welchen seitlich das Licht einer Leuchtdiode eingestrahlt wird.

Außerhalb der Schenkel liegen zwischen der überkragenden Glasplatte und dem Schaltungsträger Gummikontakte für den elektrischen Anschluss der Flüssigkristallzelle an den Schaltungsträger. Der mechanische Aufbau wird vervollkommnet durch einen, über den Sandwich-Aufbau aus Schaltungsträger, Lichtleiter, Flüssigkristallzelle und Glasplatte gestülpten, kastenförmigen Rahmen, der an den Stirnrändern seiner Seitenwände mit L-förmigen Haken ausgestattet ist, die den Rand des Schaltungsträgers hintergreifen. Dabei bestimmt die Modulhöhe dieser Flüssigkristallanzeige sich aus der Stärke des Sichtfensters im Rahmen, des Schaltungsträgers, der H-förmigen Struktur und der Glasplatte, die vom Rahmen auf die H-förmige Struktur aufgepresst wird. Das ist produktionstechnisch allerdings kritisch, weil lokale Lastspitzen zur Beschädigung der Glasplatte und damit zur Beeinträchtigung der optischen Wirkung dieser Flüssigkristallanzeige führen können.

Aus der DE 35 26 155 C2 ist ebenfalls eine von einer Lichtleiterplatte hinterlegte Flüssigkristallzelle bekannt. Licht wird dort im wesentlichen parallel zur Hauptebene der Platte von einer ihrer Schmalseiten her in sie eingestrahlt. Die in Einstrahlrichtung und damit im Längsschnitt keilförmige Leiterplatte ist an ihrer von der Flüssigkristallzelle abgewandten Rückseite stufig ausgebildet, um an den Stufenflanken Licht durch die Dicke der Platte hindurch in die Flüssigkristallanzeige hinein, deren Betrachtung- oder Sichtrichtung entgegen, auszukoppeln. Infolge der diskreten Stufengeometrie an der Rückseite der Leiterplatte ist aber trotz deren Keilform mit einer hinreichend homogenen Durchstrahlung der transmissiven Flüssigkristalizelle nicht zu rechnen, und die zwischen den Lichtleiterstufen auftretenden Helligkeitssprünge erschweren dazu noch das Ablesen einer alphanumerischen Informationsdarstellung. Offen gelassen ist in jener Vorveröffentllchung, wie ein kompakter, auch im Hinblick auf unvermeidliche Bauteiletoleranzen fertigungsfreundlicher Modulaufbau für die Anzeige unter Einschluss der Ansteuerschaltung für ihre Flüssigkristallzelle konkret gestaltet sein könnte.

Weiterhin ist aus der JP 06-011718 eine Flüssigkristallanzeige bekannt, bei welcher eine Flüssigkristallzelle von einem Rahmen übergriffen und dieser Rahmen an einer flächigen Lichtquelle befestigt ist.

Die US 4,796,977 beschreibt eine Flüssigkristallanzeige, welche einen Halterahmen aufweist, der mittels Widerhaken, weiche Öffnungen in einer Halteplatte durchgreifen, an dieser Halteplatte befestigt ist.

In dem Artikel "LED steht Kopf" von Patrick Trueson aus Design & Elektronik 06/2002, S. 25 bis 27, wird die sog. Reverse-Mount-LED-Technologie beschrieben, nach welcher eine auf der Rückseite einer Leiterplatte montierte Leuchtdiode durch eine Öffnung in dieser Leiterplatte hindurch in einen auf der Vorderseite der Leiterplatte angeordneten Lichtleiter und eine auf diesem Lichtleiter angeordnete Flüssigkristallzelle einstrahlt. Diese direkt entgegen der Sichtrichtung der Anzeige erfolgende Lichteinstrahlung bewirkt jedoch eine sehr ungleichmäßige Ausleuchtung des Anzeigefeldes der Flüssigkristallzelle, da im Bereich der Öffnung in der Leiterplatte sehr viel Licht in die Flüssigkristallzelle eingestrahlt wird, die Hinterleuchtung jedoch immer dunkler wird, je weiter das zu beleuchtende Anzeigefeld von dieser Öffnung entfernt ist.

Der Erfindung liegt nun die technische Problemstellung zugrunde, eine gattungsgemäße Flüssigkristallanzeige derart auszulegen, dass sie sich - ohne kostspielige Montageerfordemisse zu bedingen - durch kompakten und toleranzresistenten flachen Modulaufbau insbesondere zum Einsatz in der Bedienblende eines Haushaltsgroßgerätes eignet.

Gemäß der im Hauptanspruch angegebenen Merkmalskombination ist diese Aufgabe erfindungsgemäß dadurch gelöst, dass ein Sandwichaufbau aus den wie dort angegeben miteinander verrastbaren bzw. ineinander ruhenden vorgefertigten Einzelteilen möglichst geringer Anzahl realisiert wird. Damit ergibt sich für den Anzeigemodul mit seiner hinterleuchteten Flüssigkristallzelle, wie er insbesondere in der Bedienblende eines Haushaltsgroßgerätes vorkommt, ein besonders preisgünstiger Aufbau, wenn das Höhenmaß des Moduls durch die Verspannung eines die Flüssigkristallzelle und eine Lichtleiterplatte unter sich einfassenden Rahmens gegen einen Schaltungsträger erfolgt, dessen Oberfläche, auf dem die Lichtleiterplatte ruht, als erste Reflektorfläche ausgelegt ist. Zusätzlich strahlen Lichtquellen durch den Schaltungsträger hindurch in einen Schenkel an der Lichtleiterplatte gegen eine zweite Reflektorfläche zur Lichtumlenkung und dadurch zum seitlichen Lichteintritt in die Lichtleiterplatte.

Vorzugsweise wird der Schaltungsträger mit integrierten Leiterbahnen und eingeformter Aufnahme für die Lichtleiterplatte in MID-Technologie als ein Spritzgussteil gefertigt, an das auch einstückig über ein Filmscharnier der über den Sandwich-Aufbau von Lichtleiterplatte und Flüssigkristallzelle überstülpbare Rahmen angelenkt ist. Die Befestigung zwischen Rahmen und Schaltungsträger erfolgt etwa mittels fedemd verrastender Widerhaken unter Durchgriff von Positionierpfeilern, deren freie Stirnenden zur Lagefixierung heißverstämmt sind.

Bezüglich Details, Alternativen und Weiterbildungen des erfindungsgemäß gruppierten Anzeigemoduls sowie deren Vorteilen wird außer auf die weiteren Ansprüche auch auf nachstehende Beschreibung eines in der Zeichnung unter Beschränkung auf das Wesentliche aber angenähert maßstabsgerecht skizzierten bevorzugten Realisierungsbeispiel verwiesen. In der Zeichnung zeigt:
- Fig. 1: Im vertikalen Längsschnitt die zum Anzeigemodul zusammengefügten Elemente des erfindungsgemäß ausgestalteten Sandwich-Aufbaus und
- Fig.2: eine gegenüber Fig. 1 abgewandelte konstruktive Lösung, die sich durch eine noch geringere Anzahl an Einzelteilen auszeichnet.

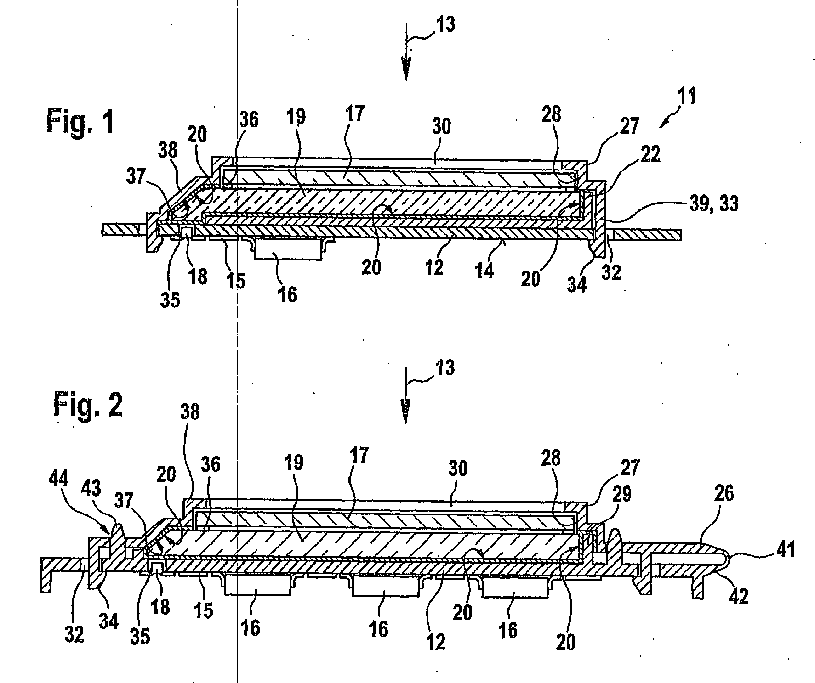

Konstruktive Basis für den aus Fig. 1 im Detail ersichtlichen Sandwich-Aufbau des Anzeigemoduls 11 mit seiner hinterleuchteten Flüssigkristallzelle 17 ist ein Schaltungsträger 12, der wenigstens auf seiner der Sichtrichtung 13 abgewandten Rückseite 14 mit Leiterbahnen 15 zur Befestigung und Verschaltung von Bauelementen 16 insbesondere für die Ansteuerung der Flüssigkristallzelle 17 und von Lichtquellen 18 ausgestattet ist.

Die Lichtquellen 18 strahlen der Sichtrichtung 13 entgegen durch den Schaltungsträger 12 hindurch in einen abgewinkelten Schenkel an einer Lichtleiterplatte 19 hinein. Des Licht (wird darin an einer Reflektorfläche 37 umgelenkt, um dadurch seitlich in die dann dort im wesentlichen planparallele Lichtleiterplatte 19 einzutreten. Aus der heraus wird die quer zu ihrer Hauptebene sichtseitig davor gelegene Flüssigkristallzelle 17 wiederum der Sichtrichtung 13 entgegen durchstrahlt, um die momentane Symboldarstellung im Anzeigemodul 11 kontrastreich zur Darstellung gelangen zu lassen. Für eine intensive aber diffuse Abstrahlung in die Zelle 17 hinein ist die der Zelle 17 benachbarte Auskoppelfläche der Platte 19 aufgerauht, vorzugsweise schon durch entsprechende Profilierung der Spritzgussform oder sonst erst nachträglich etwa durch Sandbestrahlung bzw. durch Belegung mit Rauhlack oder mit einer Rauhfolie. Die anderen Flächen der Lichtleiterplatte 19 sind möglichst glatt und vorzugsweise poliert, weil dies die besten Eigenschaften im Hinblick auf die gewünschte Totalreflektion für die Lichtleitung über die gesamte Fläche der Platte 19 erbringt.

Für die angestrebte möglichst gleichförmig helle Durchstrahlung der Flüssigkristallzelle 17 über ihre gesamte Anzeigefläche hinweg und damit zur Erhöhung der Lichtausbeute ist die Lichtleiterplatte 19 der aufgerauten Abstrahlfläche gegenüber von einer Reflektorfläche 20 hinterlegt. Bei der kann es sich um den hinsichtlich der Materialwahl (hoher Weißpigmentanteil) oder hinsichtlich einer Beschichtung (ein Anstrich oder etwa ein Stanniolbelag) reflektierenden Boden einer auf dem Schaltungsträger 12 angeordneten oder ausgebildeten wannenförmigen Aufnahme 22 für die Lichtleiteiplatte 19 handeln; oder auch einfach um einen aufgestrichenen oder aufgelegten, gut reflektierenden Belag z.B. auf einer als Schaltungsträger 12 dienenden herkömmlichen kaschierten Leiterplatte bzw. um eine Leiterplatte aus einem Material, das eine gut reflektierende helle Oberfläche aufweist.

Die Lagefixierung der Elemente dieses sandwichartig auf den Schaltungsträger 12 aufgebauten Anzeigemoduls 11 erfolgt mittels eines umlaufenden Rahmens 27, unter dessen Sichtöffnung 30 eine stufenförmig umlaufende Aufnahme 28 für den sichtseitigen Umfang der Flüssigkristallzelle 17 freigespart ist. Dieser Rahmen 27 wird über die schon auf den Schaltungsträger 12 und seine Reflektorfläche 20 aufgelegte Lichtleiterplatte 19 mit darauf ruhender Flüssigkristallzelle 17 gestülpt und am Schaltungsträger 12 unter Einhalten einer vorgegebenen Gesamtbauhöhe des Moduls befestigt.

Zwischen der Flüssigkristallzelle 17 und der Lichtleiterplatte 19 ist zweckmäßigerweise ein beispielsweise ringförmig umlaufender, mit hoher Steifigkeit komprimierbarer Abstandshalter 36 eingelegt. Der bewirkt, daß trotz unvermeidlicher Fertigungstoleranzen über die gesamte Fläche innerhalb dieses umlaufenden Abstandshalter 36 hinweg ein dünner Luftspalt zwischen der Lichtleiterplatte 19 und der Flüssigkristallzelle 17 sichergestellt bleibt, wenn die mittels des Rahmens 27 in Sichtrichtung 13 mit dem Schaltungsträger 12 verspannt wird, so daß aus nur lokalen Berührung mit ihrem deshalb großen spezifischen Druck keine Oberflächenzerstörungen resultieren können und auch störende Anlageerscheinungen wie Newton-Ringe vermieden sind.

Beim in Sichtrichtung 13 erfolgenden Aufsetzen des Rahmens 27 drückt ein an seiner Seitenwand 39 ausgebildetes oder eingelegtes Federelement 40 quer zur Sichtrichtung 13 und somit parallel zum Schaltungsträger 12 unmittelbar oder (über eine elastische Seitenwand der Aufnahme 22) mittelbar gegen den benachbarten Stirnrand der Lichtleiterplatte 19, um die ihm gegenüberliegende Umlenkfläche 37 für die Lichteinkopplung gegen die entsprechend geneigte Reflektorwand 18 satt anliegen zu lassen. Das fördert die verlustarme Umlenkung der Lichteinstrahlung von den Lichtquellen 18 durch Öffnungen 35 im Schaltungsträger 12 hindurch.

Wenn die Lichtleiterplatte 19 in einer wannenförmigen Aufnahme 22 ruht (gleichgültig, ob diese integral mit dem Schaltungsträger 12 ausgebildet oder als Beistellteil gesondert eingelegt ist), dann ist die geneigte Reflektorwand 38 zweckmäßigerweise derjenige Teil einer Wannenberandung, neben welchem ein Randbereich der Lichtleiterplatte 19 durch den im übrigen reflektierend ausgestatteten Wannenboden hindurch zur Öffnung 35 mit der Lichtquelle 18 hin abgewinkelt verläuft. Die geneigte Reflektorwand 38 für die Einstrahl-Umlenkfläche 37 der Lichtleiterplatte 19 kann aber auch Bestandteil des haubenförmigen Rahmens 27 sein, wie in Fig. 1 berücksichtigt.

Für die Verspannung des Rahmens 27 zum Schaltungsträger 12 auf eine vorgegebene Modul-Bauhöhe kann (vgl. Fig.2, in Fig. 1 nicht berücksichtigt) der Rahmen 27 mit einem flanschförmigen Kragen 26 ausgestattet sein, der unter gewissem lichtem Abstand oberhalb des Schaltungsträgers 12 umläuft und mittels etwa selbstschneidender Schrauben von rückwärts, vom Schaltungsträger 12 her der Sichtrichtung 13 entgegen, oder in Betrachtungsrichtung 13 mit dem Schaltungsträger 12 bis auf das vorgegebene Höhenmaß verschraubt und somit axial verspannt wird. Statt der Schrauben oder zusätzlich zu ihnen können auch angeformte oder eingenietete Pfeiler 43 (Fig.2) vorgesehen sein, die vom Kragen 26 her den Schaltungsträger 12 oder vom Schaltungsträger 12 her den Kragen 26 durchragen und an ihren freien Stirnenden unter Axialspannung heißverstaucht sind.

In Fig. 1 ist für leichtere Montage und Demontage vorgesehen, daß der Rahmen 27 mit angeformten, in Widerhaken 34 endenden Federarmen 33 ausgebildet ist, die Öffnungen 32 in dem Schaltungsträger 12 durchgreifend den Schaltungsträger 12 hintergreifen. Dabei kann vorgesehen sein (aus Fig. 1 nicht ersichtlich), den Hintergreifungsbereich am Schaltungsträger 12 zungenförmig zu schlitzen und dadurch über die an den freien Zungenenden angreifenden Widerhaken 34 de Rahmens 27 einen elastischen Andruck des Sandwich-Aufbaus gegen den Schaltungsträger 12 zu erzielen.

Der Schaltungsträger 12 kann als herkömmliche mit Leiterbahnen 15 kaschierte Leiterplatte ausgelegt sein. Zweckmäßiger ist es jedoch, für eine kombinierte mechanische und elektrische Funktion des Schaltungsträgers 12 auf die Mm-Technologie (Moulded Interconnecting Devices) zurückzugreifen, also auf einen im Spritzguß mit räumlicher Profilierung gefertigten Schaltungsträger 12 mit angeformter Aufnahme 22 und eingeformten Leiterbahnen 15.

Insbesondere dann, wenn der Schaltungsträger 12 keine separate Leiterplatte sondern beispielsweise in MID-Technologie als Spritzgußteil gefertigt ist, ist es zweckmäßig, die Haube 27 nicht als eigenständiges Montageteil beizustellen, sondern unmittelbar an den Schaltungsträger 12 anzuformen, wie in Fig. 2 berücksichtigt. Ein Filmscharnier 41 verbindet einen Seitenrand 42 des Schaltungsträgers 12 mit dem korrespondierenden Seitenrand des am Rahmen 27 umlaufenden Kragens 26. Wenn keine separate oder eingeformte wannenförmige Aufnahme (22 in Fig. 1) mit seitlicher Einfassung für die Lichtleiterplatte 19 vorgesehen ist, ist die sichtseitig gelegene Oberfläche des Schaltungsträgers 12 zweckmäßigerweise wenigstens mit einer reflektierenden Rippe 29 ausgestattet, die vorzugsweise als Federelement ausgebildet oder anderenfalls mit einem solchen belegt ist, um die Lichtleiterplatte 19 mit ihrer Umlenkfläche 37 für die rückwärtige Beleuchtungseinstrahlung formschlüssig gegen die (in Fig.2 am Rahmen 27 ausgebildete) Reflektorwand 38 anzuschmiegen, sobald nun der Rahmen 27 um das Filmscharnier 41 auf den Sandwich-Aufbau des Moduls 11 aufgeklappt und etwa wieder über Widerhaken 34 in Öffnungen 32 verrastet ist. Für die genaue Positionierung des mit dem Schaltungsträger 12 beweglich verbundenen Rahmens 27 können Pfeiler 43 vorgesehen sein, die am Schaltungsträger 12 befestigt oder angeformt sind und der Sichtrichtung 13 entgegen zugeordnete Öffnungen 44 im Rahmen-Kragen 26 durchragen. Zur zusätzlichen und endgültigen Aufbausicherung des Anzeigemoduls 11 können die durch den Kragen 26 vorragenden Stirnenden der Pfeiler 43 wieder in den Öffnungen 44 wärmeverstemmt werden.

## Patentansprüche

1. Hinterleuchtete Flüssigkristallanzeige, umfassend:
einen einseitig mit Bauelementen (16) bestückten Schaltungsträger (12),
eine elektrisch und mechanisch an den Schaltungsträger (12) angeschlossene Flüssigkristallzelle (17),
Lichtquellen (18),
eine, zwischen der Flüssigkristallzelle (17) und der nicht mit Bauelementen bestückten Seite des Schaltungsträgers angeordnete, quer zur Sichtrichtung (13) vom Licht der Lichtquellen (18) durchflutbare Lichtleiterplatte (19), und
einen die Flüssigkristallzelle (17) und die Lichtleiterplatte (19) unter sich aufnehmenden Rahmen (27), der kraft- und/oder formschlüssig mit dem Schaltungsträger (12) verbunden ist,
**dadurch gekennzeichnet,**
**dass** der Schaltungsträger (12) auf seiner der Lichtleiterplatte (19) zugewandten Oberfläche als eine erste Reflektorfläche (20) ausgebildet ist, die Lichtleiterplatte einen Schenkel aufweist und die auf der mit Bauelementen (16) bestückten Seite des Schaltungsträgers (12) angebrachten Lichtquellen (18) durch Öffnungen (35) im Schaltungsträger (12) hindurch in den Schenkel an der Lichtleiterplatte (19) gegen eine zweite Reflektorfläche (37) zur Lichtumlenkung und **dadurch** zum seitlichen Lichteintritt in die Lichtleiterplatte (19) einstrahlen können.

2. Flüssigkristallanzeige nach Anspruch 1,
**dadurch gekennzeichnet,**
**dass** zwischen der Flüssigkristallzelle (17) und der Lichtleiterplatte (19) ein umlaufender, komprimierbarer Abstandshalter (36) eingelegt ist.

3. Flüssigkristallanzeige nach Anspruch 1 oder 2,
**dadurch gekennzeichnet,**
**dass** der Rahmen (27) mittels Widerhaken (34) den Schaltungsträger (12) durchgreifend an einer biegeelastischen Zunge verrastet ist.

4. Flüssigkristallanzeige nach einem der vorangehenden Ansprüche,
**dadurch gekennzeichnet,**
**dass** Pfeiler (43) am Schaltungsträger (12) und/oder an einem um den Rahmen (27) umlaufenden Kragen (26) zur Positionierung des Rahmens (27) relativ zum Schaltungsträger (12) vorgesehen sind.

5. Flüssigkristallanzeige nach Anspruch 4,
**dadurch gekennzeichnet,**
**dass** die Pfeiler (43) aus heiß verstemmbarem Kunststoff an den Kragen (26) bzw. an den Schaltungsträger (12) angeformt sind.

6. Flüssigkristallanzeige nach einem der vorangehenden Ansprüche,
**dadurch gekennzeichnet,**
**dass** der Schaltungsträger (12) ein Spritzgussteil in- MID-Technologie ist, der mit der ersten Reflektorfläche (20) hinter der Lichtleiterptatte (19) und mit einer Aufnahme (22) für letztere ausgestattet ist.

7. Flüssigkristallanzeige nach einem der vorangehenden Ansprüche,
**dadurch gekennzeichnet**,
ass der Schaltungsträger (12) und der Rahmen (27) ein einziges, über ein Filmscharnier (41) klappgelenkig miteinander verbundenes Spritzgussteil sind.

8. Verwendung einer Auzeige nach einem der voreugehenden Ansprüche als Anzeigemodul (11) hinter der Bedienblende eines Haushalts großgerätes.

## Claims

1. Backlit liquid crystal display, comprising:
a circuit carrier (12) fitted on one side with components (16),
a liquid crystal cell (17) connected electrically and mechanically to the circuit carrier (12),
light sources (18),
a light guide plate (19) which is arranged between the liquid crystal cell (17) and the side of the circuit carrier not fitted with components and through which the light from the light sources (18) can flood transverse to the line of sight (13), and
a frame (27) which holds beneath it the liquid crystal cell (17) and the light guide plate (19) and is connected to the circuit carrier (12) in a force-closed and/or self-closed fashion,
**characterized**
**in that** the circuit carrier (12) is constructed as a first reflector surface (20) on its surface facing the light guide plate (19), the light guide plate has a limb, and the light sources (18) mounted on the side of the circuit carrier (12) fitted with components (16) can radiate through openings (35) in the circuit carrier (12) into the limb on the light guide plate (19) against a second reflector surface (37) for deflecting light, and thereby for the purpose of lateral light entry into the light guide plate (19).

2. Liquid crystal display according to Claim 1, **characterized in that** a peripheral, compressible spacer (36) is inserted between the liquid crystal cell (17) and the light guide plate (19).

3. Liquid crystal display according to Claim 1 or 2, **characterized in that** the frame (27) is latched by means of barbs (34) at a flexible tongue in a fashion reaching through the circuit carrier (12).

4. Liquid crystal display according to one of the preceding claims, **characterized in that** supports (43) are provided on the circuit carrier (12) and/or on a collar (26) running around the frame (27) for the purpose of positioning the frame (27) relative to the circuit carrier (12).

5. Liquid crystal display according to Claim 4, **characterized in that** the supports (43) are integrally formed from hot caulkable plastic on the collar (26) or on the circuit carrier (12).

6. Liquid crystal display according to one of the preceding claims, **characterized in that** the circuit carrier (12) is an injection-moulded part produced using MID technology and which is equipped with the first reflector surface (20) behind the light guide plate (19) and with a receptacle (22) for the latter.

7. Liquid crystal display according to one of the preceding claims, **characterized in that** the circuit carrier (12) and the frame (27) are a single injection-moulded part, being connected to one another in the manner of a valve hinge via a film hinge (41).

8. Use of a display according to one of the preceding claims as display module (11) behind the operating panel of a large household appliance.

## Revendications

1. Afficheur à cristaux liquides rétroéclairé comprenant :
un porte-circuit (12) équipé de composants (16) sur une face,
une cellule à cristaux liquides (17) raccordée électriquement et mécaniquement au porte-circuit (12),
des sources de lumière (18),
une plaque conductrice de lumière (19) pouvant être traversée par la lumière des sources de lumière (18) transversalement par rapport au sens de la vision (13) et disposée entre la cellule à cristaux liquides (17) et le côté non équipé de composants du porte-circuit,
**caractérisé en ce que**
le porte-circuit (12) est réalisé sous la forme d'une première surface de réflexion (20) sur la surface dirigée vers la plaque conductrice de lumière (19), la plaque conductrice de lumière présente une branche et les sources de lumière (18) montées sur le côté du porte-circuit (12) équipé de composants (16) peuvent irradier à travers des ouvertures (35) dans le porte-circuit (12) dans la branche sur la plaque conductrice de lumière (19) contre une deuxième surface de réflexion (37) pour dévier la lumière et ainsi en vue de la pénétration latérale de la lumière dans la plaque conductrice de lumière (19).

2. Afficheur à cristaux liquides selon la revendication 1, **caractérisé en ce qu'**entre la cellule à cristaux liquides (17) et la plaque conductrice de lumière (19) est insérée une entretoise (36) périphérique compressible.

3. Afficheur à cristaux liquides selon la revendication 1 ou 2, **caractérisé en ce que** le cadre (27) est enclenché énergiquement au niveau d'une languette flexible au moyen d'ardillons (34) du porte-circuit (12).

4. Afficheur à cristaux liquides selon l'une des revendications précédentes, **caractérisé en ce que** des piliers (43) sont prévus sur le porte-circuit (12) et/ou sur un collet (26) faisant le tour du cadre (27) pour positionner le cadre (27) par rapport au porte-circuit (12).

5. Afficheur à cristaux liquides selon la revendication 4, **caractérisé en ce que** les piliers (43) en matière plastique pouvant être matée à chaud sont façonnés sur le collet (26) ou sur le porte-circuit (12).

6. Afficheur à cristaux liquides selon l'une des revendications précédentes, **caractérisé en ce que** le porte-circuit (12) est une pièce moulée par injection en technologie MID qui est équipée de la première surface de réflexion (20) derrière la plaque conductrice de lumière (19) et d'un logement (22) pour cette dernière.

7. Afficheur à cristaux liquides selon l'une des revendications précédentes, **caractérisé en ce que** le porte-circuit (12) et le cadre (27) sont une seule pièce moulée par injection reliés ensemble de manière articulée rabattable par une charnière en film (41).

8. Utilisation d'un afficheur selon l'une des revendications précédentes comme module d'affichage (11) derrière le cache de commande d'un grand appareil ménager.
